Europäisches Patentamt

European Patent Office

Office européen des brevets

(19)

(11) Veröffentlichungsnummer: **0 079 454**
**B1**

# EUROPÄISCHE PATENTSCHRIFT

(12)

(45) Veröffentlichungstag der Patentschrift:
16.07.86

(21) Anmeldenummer: 82109139.4

(22) Anmeldetag: 04.10.82

(51) Int. Cl.⁴: **B 60 B 21/10**, B 60 B 21/02,
B 60 C 15/02

(54) Fahrzeugrad.

(30) Priorität: 14.11.81 DE 3145252

(43) Veröffentlichungstag der Anmeldung:
25.05.83 Patentblatt 83/21

(45) Bekanntmachung des Hinweises auf die Patenterteilung:
16.07.86 Patentblatt 86/29

(84) Benannte Vertragsstaaten:
AT BE CH DE FR GB IT LI LU NL SE

(56) Entgegenhaltungen:
FR - A - 333 125
GB - A - 2 030 087
US - A - 2 873 785

(73) Patentinhaber: Continental Gummi-Werke
Aktiengesellschaft, Königsworther Platz 1,
D-3000 Hannover 1 (DE)

(72) Erfinder: Seitz, Hans, Dr., Dipl.-Ing.,
Grafenbergerstrasse 5b, D-3012 Langenhagen 1 (DE)
Erfinder: Rach, Heinz-Dieter, Planetenring 32,
D-3008 Garbsen 1 (DE)
Erfinder: Pieper, Henner, Bahnhofstrasse 2B,
D-3012 Langenhagen 1 (DE)
Erfinder: Frerichs, Udo, Buchenweg 7,
D-3012 Langenhagen 8 (DE)

EP 0 079 454 B1

### Beschreibung

Die Erfindung betrifft ein luftbereiftes Fahrzeugrad mit einer starren Felge und einem Gürtelreifen mit zugfesten Kernen in den Wülsten, bei dem die Felge sich radial nach innen erstreckende Felgenhörner und neben diesen am inneren Umfang im Querschnitt geneigte Sitzflächen für den Gürtelreifen aufweist, bei dem weiterhin am inneren Umfang der Felge zur Mittelebene des Felgenkörpers hin Vertiefungen angeordnet sind, deren mittlerer Durchmesser grösser ist als der mittlere Durchmesser der Sitzflächen, wobei die Vertiefungen neben den Sitzflächen im Querschnitt geneigt verlaufen und die Neigung der Sitzflächen ohne Absatz in die Neigung der Vertiefungen übergeht, wobei der Neigungswinkel der Sitzflächen gegenüber der Axialrichtung des Rades 5° bis 15° beträgt und wobei sich der kleinste Durchmesser der Sitzfläche im Bereich des benachbarten Felgenhorns befindet.

Die Erfindung befasst sich mit einem Rad, das für den Notlauf gut geeignet ist, d.h. selbst nach einem Defekt bleibt der Reifen im begrenzten Einsatz rollfähig, ohne dauerhaften Schaden zu nehmen. Dazu ist es erforderlich, dass der Reifen sich bei einem Notlauf auf vergleichsweise breiten Felgenabschnitten abstützen kann und dass ein Ausbiegen der Seitenwände möglich bleibt.

Ein bekanntes Rad der eingangs genannten Art, das einen mit den vorstehend angeführten Eigenschaften montierten Reifen aufweist, ist z.B. in der DE-A-3 000 428 beschrieben. Obwohl dieses bekannte Rad bezüglich der Gestaltung und Zuordnung von Felge und Reifen bereits ansprechende Eigenschaften aufweist, hat es sich gezeigt, dass die dort verwendete Felge in der Herstellung nicht unbeträchtliche Schwierigkeiten bereitet.

Der Erfindung liegt deshalb die Aufgabe zugrunde, ein für einen Notlauf geeignetes Fahrzeugrad anzugeben, das unter Beibehaltung bzw. Verbesserung bisher erreichter Notlaufeigenschaften die Verwendung einer einfacher herstellbaren Felge gestattet.

Die Aufgabe wird erfindungsgemäss dadurch gelöst, dass die Neigung der Sitzflächen unter gleichem Winkel in die Neigung der Vertiefungen übergeht und dass die Axialerstreckung der Sitzflächen gleich der der geneigten Teile der Vertiefungen ist.

Die Erfindung bietet den Vorteil, dass bei ihr eine Felge verwendbar ist, die am Übergang zwischen einer Sitzfläche und einer benachbarten Vertiefung keinerlei besonderer Bearbeitung bei der Herstellung bedarf. Während die beim bekannten Notlaufrad angegebene Felge an dieser Übergangsstelle einen schwierig herzustellenden Knick aufweist, der aus Fertigungsgründen abgerundet ausgefallen ist, geht beim erfindungsgemässen Rad die Neigung der Sitzfläche am inneren Umfang der Felge bevorzugt ohne jede Richtungsänderung und ohne Absatz nahtlos in die Neigung der benachbarten Vertiefung über.

Dies bringt gleichzeitig den Vorteil mit sich, dass am äusseren Umfang der Felge die Stützflächen zur Auflage eines defekten Reifens entscheidend vergrössert werden. Während bei dem bekannten Notlaufrad im wesentlichen die den Vertiefungen gegenüberliegenden Teile des Felgenkranzes als Stützflächen dienen, treten erfindungsgemäss die den Sitzflächen gegenüberliegenden Teile der Felge hinzu, so dass sich zumindest eine Verdoppelung der Gesamtstützfläche ergibt.

Ein weiterer Vorteil besteht darin, dass durch den in Querrichtung geneigten Verlauf des Grundes der Vertiefungen und durch den nahtlosen Übergang von den benachbarten Sitzflächen eine nicht unerhebliche Materialeinsparung bei der Herstellung der Felge erzielt wird.

Vorteilhafte Ausgestaltungen der Erfindung sind den Unteransprüchen zu entnehmen.

Nachfolgend werden mehrere Ausführungsbeispiele der Erfindung beschrieben und anhand einer Zeichnung erläutert.

Es zeigt:

Fig. 1 ein Rad für ein Strassenfahrzeug in einem radialen Teilschnitt,

Fig. 2 einen Teilschnitt durch ein Rad mit einer breiteren Felge,

Fig. 3 ein Rad gemäss Fig. 1, jedoch mit einem Tiefbett auf der Aussenseite bei besonders breiter Felge.

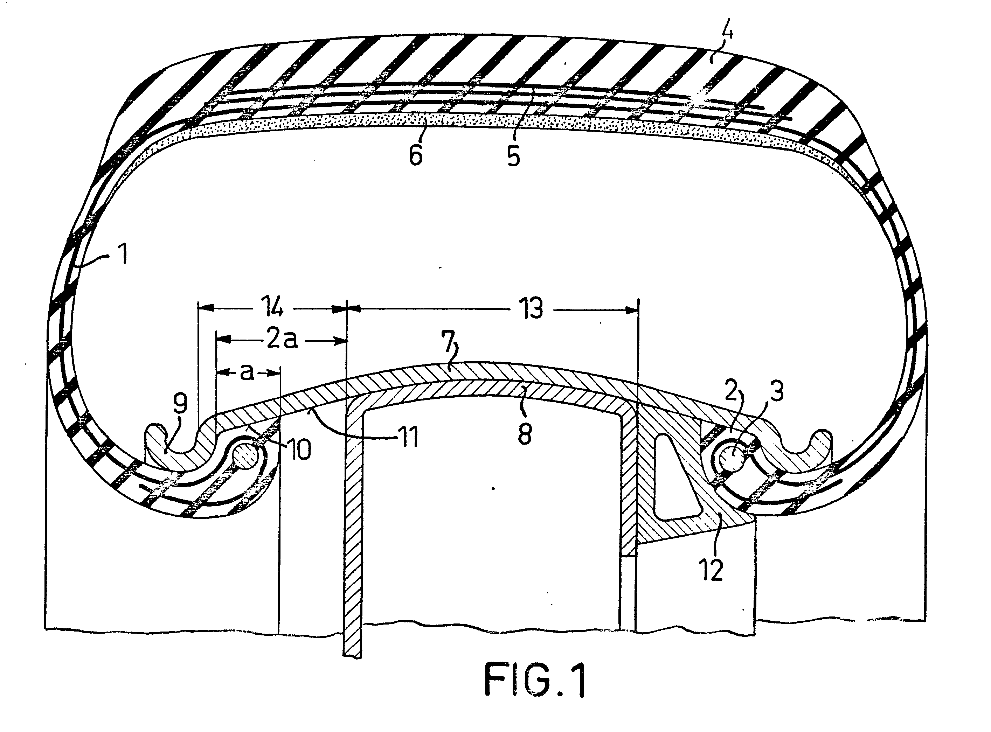

Der beim Rad gemäss Fig. 1 verwendete Fahrzeugluftreifen, der im wesentlichen aus Gummi oder gummiähnlichen Stoffen besteht, weist eine Radialkarkasse 1 auf, die in den Wülsten 2 durch Umschlingen der zugfesten Wulstkerne 3 verankert ist. Unterhalb des Laufstreifens 4 zwischen diesem und der Karkasse 1 befindet sich ein in Umfangsrichtung zugfester, aus zwei oder mehreren Cordgewebelagen bestehender Gürtel 5, der die Seitenstabilisierung des Reifenkörpers bewirkt. Der Reifenkörper weist zudem an seiner Innenfläche etwa in dem Bereich des Laufstreifens 4 eine dünne Gleitschicht 6 auf, die ein Abstützen auf dem Felgenkörper ermöglicht, zusätzlich aber auch noch als Dichtungsschicht im Falle von Perforationen dienen kann.

Der aus Metall bestehende Felgenkranz 7 ist in bekannter Weise an einer Schüssel 8 angeschweisst. Dieser Felgenkranz 7 dient zur Halterung der Reifenwülste 2 und zur Abstützung des Reifens im Notfalle.

Der Felgenkranz 7 weist im Querschnitt gesehen seitlich aussen je ein Felgenhorn 9 auf, das sich radial nach innen erstreckt. Am inneren Umfang des Felgenkranzes 7 liegt in axialer Richtung innen neben jedem Felgenhorn 9 eine Sitzfläche 10 für den Reifen, die im Querschnitt in Querrichtung gerade verläuft und gegenüber der Axialrichtung unter einem Winkel von 5° bis 15° geneigt sein kann, und zwar in der Weise, dass der kleinere Durchmesser sich neben dem Felgenhorn 9 befindet, während der grösste Felgeninnendurchmesser im Bereich der Sitzfläche 10 sich genau am Übergang zur benachbarten Vertiefung 11 befindet. Die Axialerstreckung der Sitzfläche 10 beträgt a.

Die Innenwand des Felgenkranzes 7 geht in Richtung auf die Mittelebene hin ohne Absatz und unter gleichem Neigungswinkel bezüglich der Axialrichtung von der Sitzfläche 10 zur benachbarten Vertiefung 11 über und behält diesen Verlauf über die gesamte Breite der Vertiefung 11 bei. In Axialrichtung weist die Vertiefung 11 im wesentlichen die gleiche Erstreckung a auf wie die Sitzfläche 10. Die Vertiefung 11 dient dazu, den Reifen mit seinen zugfesten Drahtkernen 3 auch bei einteiligen Felgen montieren zu können. Nach der Montage des Reifens kann die Vertiefung 11 mittels eines Distanzringes 12 ausgefüllt werden, um die Reifenwülste 2 gegen ein Abrutschen zusätzlich zu sichern.

Auf der radial äusseren Seite weist der Felgenkranz 7 zwischen den den Vertiefungen 11 gegenüberliegenden Teilen, also im Mittenbereich einen im Querschnitt konvexen Abschnitt 13 auf, so dass ein sehr gleichmässiger Übergang von der mittleren Stützfläche 13 zu den beiden seitlich gelegenen Stützflächen 14 erreicht wird.

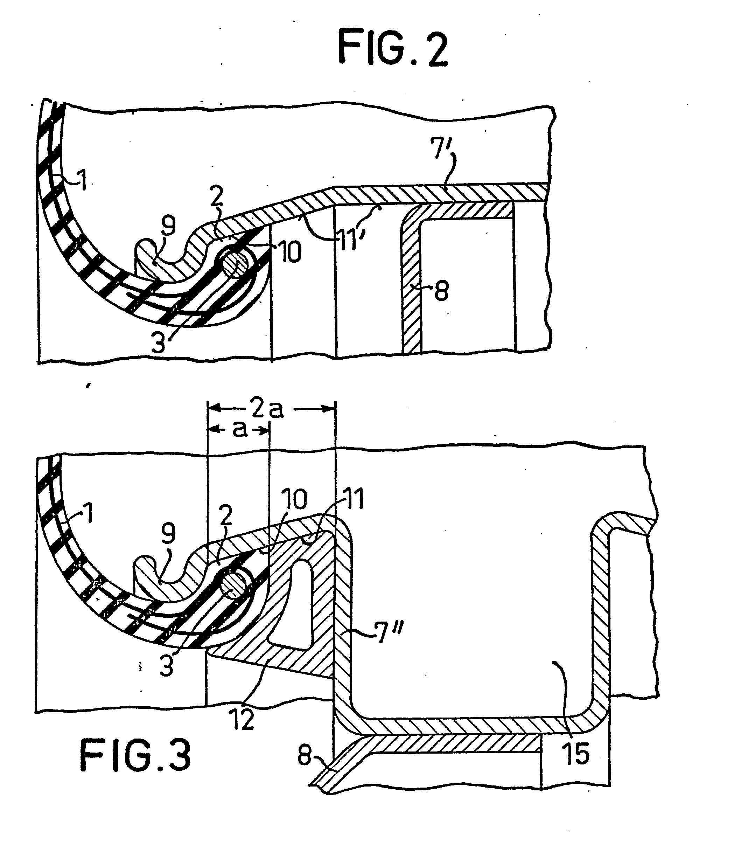

Der Felgenkranz 7′ des Rades gemäss Fig. 2 weist in Axialrichtung von der Aussenseite zur Mitte hin zunächst den gleichen Verlauf auf wie der gemäss Fig. 1. Der Unterschied besteht in einer grösseren Breite der Vertiefung 11′. Der erste Teil der Vertiefung 11′ ist von der Form und den Abmessungen her identisch mit der gesamten Vertiefung 11 gemäss Fig. 1, während der zweite Teil zylinderförmig ausgebildet ist, so dass bei ihm der Grund der Vertiefung 11′ im Querschnitt achsparallel verläuft. Der Innendurchmesser des Felgenkranzes 7′ im Bereich des zweiten Teils der Vertiefung 11′ ist gleich dem grössten Innendurchmesser im Bereich des ersten Teils. Felgen gemäss Fig. 2 sind für Reifen grösserer Breite geeignet.

Das Rad gemäss Fig. 3 unterscheidet sich von dem nach Fig. 1 dadurch, dass der Felgenkranz 7″ zwischen den beiden Vertiefungen 11 ein auf der radial äusseren Seite angeordnetes Tiefbett 15 aufweist, das bei besonders breiten Felgenausführungen zur besseren Montage dient.

Es sind auch weitere Ausführungsformen denkbar, die durch Kombination von Elementen der geschilderten Beispiele entstehen. So kann in dem Beispiel nach Fig. 2 auch ein radial aussen liegendes Tiefbett 15 gemäss Fig. 3 vorgesehen sein. Im Beispiel der Fig. 2, bei dem ein zylinderförmiger Teil einer Vertiefung 11′ vorhanden ist, könnte der geneigte Teil der Vertiefung 11′ in axialer Richtung verkürzt sein.

## Patentansprüche

1. Luftbereiftes Fahrzeugrad mit einer starren Felge und einem Gürtelreifen mit zugfesten Kernen in den Wülsten, bei dem die Felge sich radial nach innen erstreckende Felgenhörner und neben diesen am inneren Umfang im Querschnitt geneigte Sitzflächen für den Gürtelreifen aufweist, bei dem weiterhin am inneren Umfang der Felge zur Mittelebene des Felgenkörpers hin Vertiefungen angeordnet sind, deren mittlerer Durchmesser grösser ist als der mittlere Durchmesser der Sitzflächen, wobei die Vertiefungen (11) neben den Sitzflächen (10) im Querschnitt geneigt verlaufen und die Neigung der Sitzflächen (10) ohne Absatz in die Neigung der Vertiefungen (11) übergeht, wobei der Neigungswinkel der Sitzflächen (10) gegenüber der Axialrichtung des Rades 5° bis 15° beträgt und wobei sich der kleinste Durchmesser der Sitzfläche (10) im Bereich des benachbarten Felgenhorns (9) befindet, dadurch gekennzeichnet, dass die Neigung der Sitzflächen (10) unter gleichem Winkel in die Neigung der Vertiefungen (11) übergeht und dass die Axialerstreckung (a) der Sitzflächen (10) gleich der der geneigten Teile der Vertiefungen (11) ist.

2. Rad nach Anspruch 1, dadurch gekennzeichnet, dass die Vertiefungen (11, 11′) ausser dem geneigten (Teil 11) noch einen weiteren Teil (11′) aufweisen, der im Querschnitt parallel zur Axialrichtung des Rades verläuft.

3. Rad nach den Ansprüchen 1 oder 2, dadurch gekennzeichnet, dass der Felgenkörper an seinem äusseren Umfang ein an sich bekanntes Tiefbett (15) aufweist.

4. Rad nach den Ansprüchen 1 oder 2, dadurch gekennzeichnet, dass der Felgenkörper an seinem äusseren Umfang eine im Querschnitt konvexe Wölbung (13) aufweist.

5. Rad nach einem der vorhergehenden Ansprüche, gekennzeichnet durch einen am Reifenwulst (2) anliegenden Distanzring (12), der im wesentlichen den Raum der Vertiefung (11, 11′) ausfüllt.

## Claims

1. Vehicle wheel fitted with a pneumatic tyre, including a rigid rim and a belted tyre with substantially inextensible cores in the beads, wherein the rim has radially and inwardly extending rim flanges and seating surfaces for the belted tyre which have an inclined cross-section and are situated adjacent said flanges on the inner circumference, and wherein also recesses are provided on the inner circumference of the rim and extend towards the central plane of the rim body, the average diameter of said recesses being greater than the average diameter of the seating surfaces, whereby the recesses (11) extend with an inclined cross-section adjacent the seating surfaces (10), and the inclination of the seating surfaces (10) passes without interruption into the inclination of the recesses (11), whereby the angle of inclination of the seating surfaces (10) relative to the axial direction of the wheel is 5° to 15°, and whereby the smallest diameter of the seating surface (10) is situated in the region of the adjacent rim flange (9), characterised in that the inclination of the seating surfaces (10) passes into the inclination of the recesses (11) at the same angle, and in that the axial extension (a) of the seating surfaces (10) is identical to that of the inclined portions of the recesses (11).

2. Wheel according to claim 1, characterised in that, in addition to having the inclined portion (portion 11), the recesses (11, 11′) also have an additional portion (11') which, in cross-section, extends parallel to the axial direction of the wheel.

3. Wheel according to claim 1 or 2, characterised in that the rim body has, on its outer circumference, a drop base (15) known per se.

4. Wheel according to claim 1 or 2, characterised in that the rim body has, on its outer circumference, a curved portion (13) with a convex cross-section.

5. Wheel according to any of the preceding claims, characterised by a spacer ring (12) which abuts against the tyre bead (2) and substantially fills the area of the recess (11, 11').

**Revendications**

1. Roue de véhicule à bandage pneumatique, comprenant une jante rigide et un pneumatique à carcasse radiale qui renferme des tringles résistantes à la traction dans ses talons, ladite jante comportant des rebords de jante qui s'étendent radialement vers l'intérieur et, à côté de ces rebords, le long de la périphérie intérieure, des surfaces de support (10) à profil incliné pour le pneumatique, dans laquelle il est prévu en outre, le long de la périphérie intérieure de la jante, en se dirigeant vers le plan médian du corps de jante, des gorges (11) dont le diamètre moyen est plus grand que le diamètre moyen des surfaces de support, lesdites gorges s'étendant avec un profil incliné à côté des surfaces de support (10) et lesdites surfaces de support étant dans le prolongement sans épaulement des gorges (11), l'angle de pente des surfaces de support (10) sur la direction axiale de la roue étant de 5 à 15°, et le plus petit diamètre des surfaces de support (10) se trouvant dans la région du rebord de jante (9) adjacent, caractérisée en ce que les surfaces de support (10) prolongent directement les gorges (11), en conservant le même angle de pente et en ce que la dimension axiale (a) des surfaces de support est égale à celle des parties inclinées des gorges (11).

2. Roue selon la revendication 1, caractérisée en ce que, en dehors de la partie inclinée (11), les gorges (11, 11') présentent encore une autre partie qui, en profil transversal, s'étend parallèlement à la direction axiale de la roue.

3. Roue selon l'une des revendications 1 et 2, caractérisée en ce que le corps de la jante présente sur sa périphérie extérieure une base creuse (15), de façon connue en soi.

4. Roue selon l'une des revendications 1 et 2, caractérisée en ce que le corps de la jante présente, sur sa périphérie extérieure, un bombé (13) présentant un profil transversal de forme convexe.

5. Roue selon l'une quelconque des revendications précédentes, caractérisée par un anneau entretoise (12) appuyé contre le talon (2) du pneumatique, et qui remplit sensiblement l'espace résiduel de la gorge (11, 11').

FIG.1

# FIG. 2

# FIG. 3